# FASCICULE DE BREVET EUROPEEN

(11) **EP 3 725 578 B1**
(45) Date de publication et mention de la délivrance du brevet: **22.12.2021**
(21) Numéro de dépôt: 20169843.8
(22) Date de dépôt: 16.04.2020
(51) Int. Cl.: B60K 11/08, F01P 7/10

(54) **DISPOSITIF D'AÉRATION POUR UN VÉHICULE, VÉHICULE ASSOCIÉ**
BELÜFTUNGSVORRICHTUNG FÜR EIN FAHRZEUG, UND ENTSPRECHENDES FAHRZEUG
VENTILATION DEVICE FOR A VEHICLE, ASSOCIATED VEHICLE

(30) Priorité: 16.04.2019 FR 1904039
(43) Date de publication de la demande: 21.10.2020
(73) Titulaire: Flex-N-Gate France, 25405 Audincourt (FR)
(72) Inventeur: GUYON, Cyrille, 25600 NOMMAY (FR)
(74) Mandataire: Lavoix

(56) Documents cités:
- EP-A1- 3 109 084
- WO-A1-2018/198664
- DE-A1- 3 905 717
- DE-A1- 10 002 023
- DE-U1-202013 002 675

## Description

La présente invention concerne un dispositif d'aération pour un véhicule comprenant un cadre définissant une ouverture et un dispositif d'obturation comprenant au moins un volet d'obturation s'étendant selon une direction générale dans l'ouverture, le dispositif d'obturation étant mobile entre une position ouverte et une position d'obturation, dans laquelle une surface de passage de l'air au travers du dispositif d'aération est inférieure à la surface de passage de l'air dans la position ouverte, le volet étant mobile entre une position ouverte lorsque le dispositif d'obturation est dans la position ouverte et une position d'obturation lorsque le dispositif d'obturation est dans la position d'obturation, le dispositif d'obturation comprenant un premier actionneur configuré pour déplacer le volet d'obturation entre ses positions ouverte et d'obturation par un premier point d'actionnement.

L'invention concerne plus particulièrement un dispositif d'aération destiné à gérer des flux d'air d'un véhicule automobile. Ce système peut avantageusement être utilisé pour la gestion de la température du moteur du véhicule mais il peut également être utilisé pour la gestion de l'aérodynamique du véhicule.

Un tel dispositif d'aération est, par exemple, agencé à l'avant du véhicule et fait partie de la calandre du véhicule. Le dispositif d'aération permet la gestion d'un flux d'air entrant et destiné à être en contact avec le radiateur système de refroidissement du moteur et permettant de maintenir le moteur à la température optimale de fonctionnement. Ce dispositif connu permet avantageusement de combiner une forme aérodynamique performante du véhicule et une température de fonctionnement du moteur optimale.

Ces dispositifs d'aération sont la plupart du temps cachés derrière des grilles ou calandres.

Les dispositifs d'obturation de ces dispositifs d'aération posent des problèmes de rigidité, notamment dans le cas de volets d'obturation de grandes dimensions, c'est-à-dire de volets ayant une longueur supérieure ou égale à 350 millimètres (mm).

En outre, lorsque ces dispositifs d'obturation sont visibles de l'extérieur du véhicule, le risque de fléchissement des dispositifs d'obturations devient important du fait de la pression de l'air devenant très importante sur le dispositif d'obturation.

En effet, pour de de tels volets de grandes dimensions et/ou lorsque les volets sont exposés à la pression de l'air, des problèmes d'enrayement de leur mouvement de rotation entre leur position ouverte et d'obturation peuvent se poser. Il en résulte que les volets ne présentent pas une cinématique optimale entre leur position ouverte et leur position d'obturation.

Pour résoudre ces problèmes, il est connu de l'état de la technique de prévoir plusieurs dispositifs d'obturation distincts ayant des volets de plus petite longueur s'étendant dans la continuité les uns des autres et ayant chacun un système de mise en rotation des volets. Le choix dans la dimension et la forme des volets est donc limité.

Un dispositif d'aération pour un véhicule comprenant un cadre définissant une ouverture et un dispositif d'obturation comprenant au moins un volet d'obturation s'étendant selon une direction générale dans l'ouverture avec le volet d'obturation étant mobile entre une position ouverte et une position d'obturation, et comprenant un premier et un deuxième actionneurs de volets est montré par EP 3 109 084 A1.

Ces dispositifs d'obturation sont relativement encombrants, complexes à réaliser et à monter sur le véhicule du fait de la multiplicité des pièces impliquées dans la fabrication de ces dispositifs.

L'invention vise à pallier ces inconvénients en proposant un dispositif d'aération amélioré.

A cet effet, l'invention porte sur un dispositif d'aération du type précité comprenant un deuxième actionneur configuré pour déplacer le volet d'obturation entre ses positions ouverte et d'obturation par un deuxième point d'actionnement, le deuxième point d'actionnement étant distinct du premier point d'actionnement, le premier et le deuxième actionneurs étant configurés pour déplacer conjointement le volet d'obturation.

Le deuxième actionneur permet d'améliorer le mouvement de rotation entre la position ouverte et la position d'obturation en augmentant le couple applicable sur le volet et en multipliant les points d'actionnement sur le volet.

De plus, le système d'aération est sécurisé du fait de l'utilisation d'au moins deux actionneurs différents, la redondance des actionneurs permettant un actionnement du dispositif d'obturation même en en cas de défaillance d'un des actionneurs.

En outre, le dispositif d'obturation permet une plus grande liberté dans le choix de la forme du volet.

Selon un mode de réalisation, le dispositif d'aération comporte l'une ou plusieurs des caractéristiques suivantes, prises isolément ou en combinaison:
- l'ouverture est délimitée au moins par une branche inférieure et une branche supérieure, le premier et le deuxième actionneurs étant déportés sur un côté du cadre hors de l'ouverture, lesdits premier et deuxième actionneurs s'étendant d'un côté de la branche inférieure et/ou supérieure opposé à l'ouverture ;
- chaque volet d'obturation est monté pivotant à chacune de ses extrémités sur le cadre selon un axe de pivotement sensiblement parallèle à ladite direction générale pour faire pivoter le volet d'obturation entre la position ouverte et la position d'obturation, le premier et le deuxième actionneurs étant configurés pour faire pivoter le volet d'obturation entre la position ouverte et la position d'obturation ;
- l'axe de pivotement est décalé de l'axe longitudinal central du volet d'obturation ;
- le premier actionneur et le deuxième actionneur sont espacés l'un de l'autre d'au moins 100mm ;
- la longueur du volet d'obturation, mesurée selon la direction générale, est supérieure à 200mm ;
- le volet d'obturation présente une forme incurvée ;
- le dispositif d'aération comprend un premier et un deuxième organes d'entrainement, le premier organe d'entrainement étant lié d'une part au premier actionneur et d'autre part au volet d'obturation de sorte que le premier actionneur déplace le volet d'obturation par l'intermédiaire du premier organe d'entraînement, le deuxième organe d'entrainement étant lié d'une part au deuxième actionneur et d'autre part au volet d'obturation de sorte que le deuxième actionneur déplace le volet d'obturation par l'intermédiaire du deuxième organe d'entraînement ; et
- le premier et le deuxième organes d'entrainement sont des biellettes rigides.

L'invention se rapporte également à véhicule comprenant un tel dispositif d'aération.

D'autres aspects et avantages de l'invention apparaitront à la lecture de la description qui suit, donnée à titre d'exemple et faite en référence aux dessins annexés parmi lesquels :
[Fig. 1] - la figure 1 est une vue de face d'une partie du dispositif d'aération selon l'invention ; et
[Fig 2] - la figure 2 est une représentation schématique en perspective d'une partie du dispositif d'aération selon l'invention.

Il est défini une première direction, X. Dans le présent exemple, la première direction est parallèle à un axe avant-arrière du véhicule. La première direction est notée « première direction X ».

Dans la présente description, il est aussi défini une deuxième direction parallèle aux essieux du véhicule. La deuxième direction est notée « deuxième direction Y » ou « direction générale Y » et correspond ainsi à la largeur du véhicule.

Enfin, il est également défini une troisième direction, perpendiculaire à la première direction X et à la deuxième direction Y. Dans le présent exemple, la troisième direction correspond à la hauteur du véhicule. La troisième direction est notée « troisième direction Z ».

On qualifie d'intérieur l'ensemble des volumes contenus dans un véhicule. Par extension, on qualifie de face intérieure, une face tournée vers un volume intérieur du véhicule. Par opposition, on qualifie d'extérieur tout volume étant extérieur au véhicule et une face extérieure est tournée vers un volume extérieur.

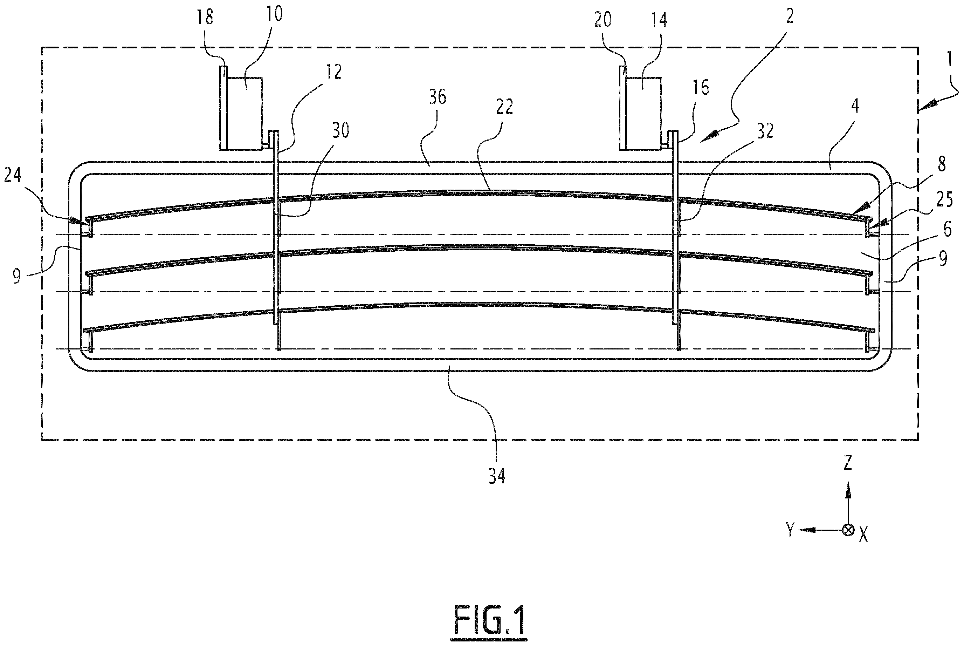

En référence à la figure 1, on décrit un dispositif d'aération 1 comprenant un dispositif d'obturation 2 et un cadre 4. Un tel dispositif d'aération 1 est destiné à être monté sur un véhicule, par exemple à l'avant de celui-ci par exemple dans le pare-chocs du véhicule ou une pièce dédiée.

Le cadre 4 définit une ouverture 6 d'entrée d'air dans le véhicule. L'ouverture d'entrée d'air 6 permet le passage de l'air dans le véhicule.

Selon un mode de réalisation, le cadre 4 est formé par le pare-chocs du véhicule.

Le dispositif d'obturation 2 comprend au moins un volet d'obturation 8. Dans la suite de la description le volet d'obturation 8 peut être nommé « volet 8 ».

Le dispositif d'obturation 2 comprend par ailleurs au moins deux supports 9 de volet 8 maintenant chaque volet mobile en rotation. En particulier, les deux supports 9 maintiennent chaque volet mobile en rotation autour d'un axe de pivotement P sensiblement parallèle à la direction générale Y.

Le volet d'obturation 8 est mobile entre une position ouverte et une position d'obturation. La position ouverte du volet d'obturation 8 est la position dans laquelle la surface de passage de l'air au travers du dispositif d'aération 1 est maximale, le plan formé par le volet d'obturation 8 étant par exemple perpendiculaire au plan formé par le cadre 4. La position d'obturation du volet d'obturation 8 est la position dans laquelle la surface de passage de l'air au travers du dispositif d'aération est minimale, le plan formé par le volet d'obturation 8 étant par exemple coplanaire au plan formé par le cadre 4. En position d'obturation, les volets d'obturation 8 sont par exemple aptes à obturer complètement le passage de l'air au travers du dispositif d'aération 1. Selon un mode de réalisation particulier, le volet d'obturation 8 est mobile entre une multitude de positions de transition entre la position ouverte et la position d'obturation, permettant de réguler précisément la surface de passage de l'air au travers du dispositif d'aération 1, ou en d'autres termes, le flux d'air au travers de l'ouverture 6.

Dans le présent exemple de réalisation, le dispositif d'obturation 2 comprend une pluralité de volets d'obturation 8. Les volets d'obturation 8 sont par exemple en un matériau polymère.

Chaque volet d'obturation 8 s'étend selon une direction générale sensiblement parallèle à la deuxième direction Y dans l'ouverture 6. Le volet d'obturation 8 définit un axe longitudinal central C passant par le centre de masse du volet d'obturation 8 et orienté suivant l'orientation générale du volet d'obturation 8.

Dans le cas où le dispositif comprend plusieurs volets d'obturation 8, les volets d'obturation sont alors disposés les uns au-dessus des autres principalement selon la troisième direction Z, tel que visible sur la figure 1.

Chaque volet d'obturation 8 comprend un panneau 22 et au moins deux organes de guidage. Dans un mode de réalisation particulier, le volet d'obturation 8 comporte un premier organe de guidage 24 et un deuxième organe de guidage 25.

Le dispositif d'obturation 2 comprend un premier actionneur 10 et un deuxième actionneur 14, agencés pour déplacer chaque volet 8. Selon un mode de réalisation particulier illustré en figure 1, le premier actionneur est lié à un premier organe d'entrainement 12 et le deuxième actionneur 14 est lié à un deuxième organe d'entrainement 16. Le premier organe d'entrainement 12 transmet au volet 8 le mouvement du premier actionneur 10 et le deuxième organe d'entrainement 16 transmet au volet 8 le mouvement du deuxième actionneur.

Le dispositif d'obturation 2 comprend une première zone de fixation 18 maintenant en position le première actionneur 10 et une deuxième zone de fixation 20 maintenant en position le deuxième actionneur 14.

La première 18 et la deuxième 20 zones de fixation sont solidaires du cadre 4 support du système d'obturation. La première 18 et la deuxième 20 zones de fixation sont placées à l'intérieur du véhicule. La première et la deuxième zones de fixation sont déportés sur un côté du cadre 4.

Le panneau 22 du volet d'obturation 8 est une plaque allongée suivant la direction Y. L'épaisseur du panneau 22 est significativement inférieure aux autres dimensions du panneau 22. L'épaisseur est notamment significativement inférieure à la longueur selon la direction générale et la largeur, la largeur étant la dimension perpendiculaire à l'épaisseur et à la direction générale.

L'épaisseur du panneau 22 est par exemple au moins vingt fois plus faible que la longueur selon la direction générale.

L'épaisseur du panneau 22 est par exemple au moins trois fois plus faible que la largeur selon la direction générale.

Le panneau 22 est selon un mode de réalisation particulier incurvé. Le rayon de courbure du panneau 22 est par exemple compris entre 3 et 4 mètres.

Selon un mode de réalisation, la longueur totale du panneau 22 est supérieure à 200mm. La longueur totale du volet d'obturation est alors supérieure à 200mm.

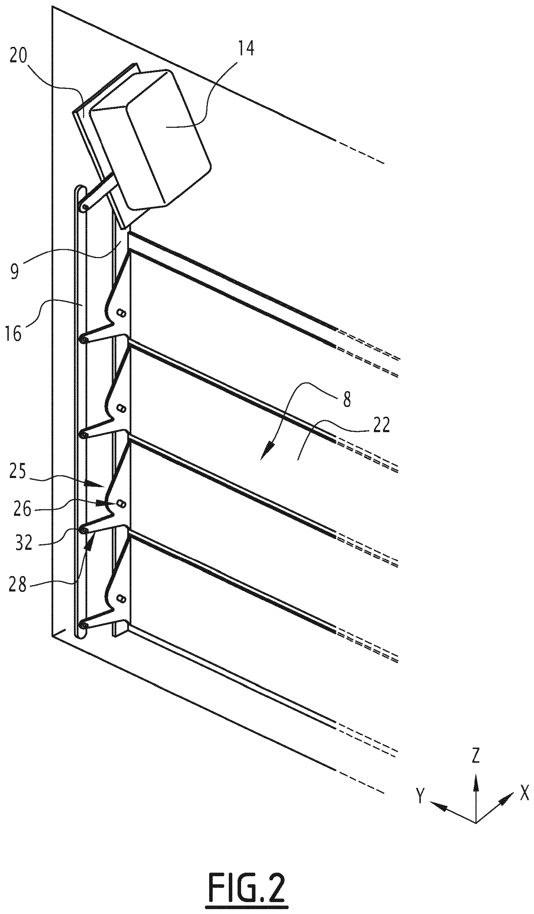

Le premier 24 et le deuxième 25 organes de guidage comprennent une région de pivot 26 ainsi qu'une région d'entrainement 28, comme illustré sur la figure 2.

La région de pivot 26 coopère avec le support 9 afin de guider en rotation le volet d'obturation 8 autour de l'axe de pivotement P. L'axe de pivotement P passe ainsi par la région de pivot 26.

L'axe de pivotement P est décalé de l'axe longitudinal central C du volet d'obturation.

Le premier et le deuxième organes de guidage sont selon un mode de réalisation particulier, placés aux extrémités du panneau 22 selon la direction générale.

La région d'entrainement 28 du premier organe de guidage 24 est articulée par rapport au premier organe d'entrainement 12 en un premier point d'actionnement 30. Le premier organe de guidage 24 est mobile par rapport au premier organe d'entrainement 12 en rotation selon un axe orienté suivant la direction principale et passant par le premier point d'actionnement 30.

La région d'entrainement 28 du deuxième organe de guidage 25 est articulée par rapport au deuxième organe d'entrainement 16 en un deuxième point d'actionnement 32. Le deuxième organe de guidage 25 est mobile par rapport au deuxième organe d'entrainement 16 en rotation selon un axe orienté suivant la direction principale et passant par le deuxième point d'actionnement 32.

Le premier 30 et le deuxième 32 points d'actionnement sont deux points d'actionnement distincts. Le premier 30 et le deuxième 32 point d'actionnement sont décalés d'au moins 50 mm du milieu du volet selon sa direction principale.

Le premier point d'actionnement est par exemple placé sensiblement à un quart de la longueur du volet et le deuxième point d'actionnement est placé sensiblement aux trois quarts de la longueur du volet en mesurant depuis une extrémité du volet selon la direction générale Y. Alternativement, le premier point d'actionnement 30 est placé sensiblement à un tiers de la longueur du volet 8 et le deuxième point d'actionnement 32 est placé sensiblement aux deux tiers de la longueur du volet 8.

La mise en rotation et le maintien par le premier 12 et le deuxième 16 organes d'entrainement espacés l'un de l'autre du volet d'obturation 8 permet notamment d'éviter une torsion de ce volet 8 autour de son axe longitudinal central C. L'utilisation du premier 12 et du deuxième 16 organes d'entrainement permet en particulier d'augmenter la rigidité du dispositif d'obturation en multipliant le nombre de points liés au châssis du véhicule.

Le premier organe d'entrainement est articulé en ses deux extrémités, d'une part avec le premier actionneur 10 et d'autre part avec le volet d'obturation 8. En particulier, le premier organe d'entrainement 12 est lié d'une part au premier actionneur 10 et d'autre part à la région d'entrainement 28 du premier organe de guidage 24 par une liaison pivot d'axe orienté suivant la direction principale.

Le premier organe d'entrainement 12 est par exemple une biellette transmettant le mouvement du premier actionneur 10 au premier point d'actionnement 30.

Similairement au premier organe, le deuxième organe d'entrainement 16 est articulé en ses deux extrémités, d'une part avec le deuxième actionneur 14 et d'autre part avec le volet d'obturation 8. En particulier, le deuxième organe d'entrainement 16 est lié d'une part au deuxième actionneur 14 et d'autre part à la région d'entrainement 28 du deuxième organe de guidage 25 par une liaison pivot d'axe orienté suivant la direction principale.

Le deuxième organe d'entrainement 16 est par exemple une biellette transmettant le mouvement du deuxième actionneur 14 au deuxième point d'actionnement 32. Le cadre 4 délimitant l'ouverture 6 comprend au moins une branche inférieure 34 et une branche supérieure 36 espacées l'une de l'autre selon la troisième direction Z. L'ouverture 6 s'étend entre la branche inférieure et la branche supérieure. La branche inférieure 34 et la branche supérieure 36 sont orientées selon la direction principale.

Selon un mode de réalisation particulier, le cadre 4 comporte les deux supports 9. Les deux supports 9 forment alors des branches latérales du cadre 4 reliant les branches inférieure et supérieure l'une à l'autre à chacune de leurs extrémités selon la direction principale. L'ouverture 6 s'étend alors entre les deux supports 9.

Le premier 10 et le deuxième 14 actionneurs sont déportés hors de l'ouverture 6. Au moins un organe de solidarisation maintien le premier actionneur 10 sur la première zone de fixation 18. Le premier actionneur 10 est déporté sur un côté du cadre 4 hors de l'ouverture 6. Le premier actionneur 10 s'étend notamment d'un côté de la branche supérieure 36 opposé à l'ouverture. En d'autres termes, le premier actionneur 10 ne s'étend pas dans ou en regard de l'ouverture selon la première direction X. Selon un mode de réalisation alternatif, le premier actionneur 10 s'étend d'un côté de la branche inférieure 34 opposé à l'ouverture.

De façon similaire au premier actionneur 10, au moins un organe de solidarisation maintien le deuxième actionneur 14 sur la deuxième zone de fixation 20. Le deuxième actionneur 14 est déporté sur un côté du cadre 4 hors de l'ouverture 6. Le deuxième actionneur 14 s'étend notamment d'un côté de la branche supérieure 36 opposé à l'ouverture 6. En d'autres termes, le deuxième actionneur 14 ne s'étend pas dans ou en regard de l'ouverture selon la première direction X. Selon un mode de réalisation alternatif, le deuxième actionneur 14 s'étend d'un côté de la branche inférieure opposé à l'ouverture.

Cette configuration permet alors de cacher le premier 10 et le deuxième 14 actionneurs de la vue d'un utilisateur hors du véhicule puisqu'ils ne sont pas visibles par l'ouverture 6. Ceci améliore ainsi l'esthétique du véhicule.

Dans un mode de réalisation non illustré, le premier 12 et le deuxième 16 organes d'entrainement sont guidés par rapport au cadre 6 en leur extrémité opposée à celle liée aux actionneurs 10 et 14 et sont articulés entre leurs extrémités avec la région d'entrainement 28 des volets d'obturation 8. Selon cette variante, le premier organe d'entrainement 12 est guidé d'un côté de l'ouverture 6 par un premier moyen de guidage supplémentaire et est actionné de l'autre côté de l'ouverture par le premier actionneur 10. De même, le deuxième organe d'entrainement 16 est alors guidé d'un côté de l'ouverture 6 par un deuxième moyen de guidage supplémentaire et est actionné de l'autre côté de l'ouverture par le deuxième actionneur 14. En particulier, si un actionneur 10, respectivement 14, du premier 12, respectivement du deuxième 16 organe d'entrainement, s'étend d'un côté de la branche supérieur 36 opposé à l'ouverture, alors le moyen de guidage supplémentaire du premier 12, respectivement du deuxième 16 organe d'entrainement, s'étend d'un côté de la branche inférieure 34 opposé à l'ouverture. De même, si un actionneur 10, respectivement 14, du premier 12, respectivement du deuxième 16 organe d'entrainement, s'étend d'un côté de la branche inférieure 34 opposé à l'ouverture, alors le moyen de guidage supplémentaire du premier 12, respectivement du deuxième 16 organe d'entrainement, s'étend d'un côté de la branche supérieure 36 opposé à l'ouverture. Le premier 10 et le deuxième 14 actionneurs sont espacés l'un de l'autre d'au moins 100 mm selon la direction générale Y.

Le premier 10 et le deuxième 14 actionneurs sont configurés pour faire pivoter le volet d'obturation 8. Le premier 10 et le deuxième 14 actionneurs sont plus particulièrement configurés pour faire pivoter le volet d'obturation 8 entre ses positions ouverte et d'obturation par l'intermédiaire du premier 12 et du deuxième 16 organes d'entrainement.

Le premier actionneur 10 est configuré pour déplacer le volet d'obturation 8 en déplaçant le premier point d'actionnement 30.

Le deuxième actionneur 14 est configuré pour déplacer le volet d'obturation 8 en déplaçant le deuxième point d'actionnement 32.

Le premier 10 et le deuxième 14 actionneurs sont configurés pour faire pivoter conjointement le volet d'obturation 8.

Le premier 10 et le deuxième 14 actionneurs sont par exemple synchronisés électroniquement pour entrainer le premier 30 et le deuxième 32 points d'actionnement selon une même rotation autour de l'axe de pivotement P. Le premier 10 et le deuxième 14 actionneurs sont notamment actionnés en même temps. Le mouvement du premier 30 et du deuxième 32 points d'actionnement est simultané et suit une même cinématique. Selon un mode de réalisation particulier, le mouvement du premier 10 et du deuxième 14 actionneurs suit une même cinématique.

Le dispositif d'aération précédemment décrit, comporte deux actionneurs 10 et 14 différents actionnant le volet 8 en deux points d'actionnement 30 et 32 différents. Ceci permet l'application d'un couple plus élevé sur le volet d'obturation 8, limitant les possibles problèmes d'enrayement.

Le fonctionnement du dispositif d'aération 1 selon l'invention va maintenant être décrit.

Le premier 10 et le deuxième 14 actionneurs comportent par exemple un moteur entrainant une région mobile de l'actionneur en rotation.

Le mouvement généré par le moteur du premier actionneur 10 et sa région mobile entraine le mouvement du premier organe d'entrainement 12, lui-même entrainant le déplacement du premier point d'actionnement 30 et entrainant la rotation du volet d'obturation 8 autour de l'axe de pivotement P.

De même, le mouvement généré par le moteur du deuxième actionneur 14 et sa région mobile entraine le mouvement du deuxième organe d'entrainement 16, lui-même entraînant le déplacement du deuxième point d'actionnement 32 et entrainant la rotation du volet d'obturation 8 autour de l'axe de pivotement P.

Les moteurs du premier 10 et du deuxième actionneur 14 sont notamment synchronisés afin d'entrainer en rotation le volet d'obturation 8 sans déformer ledit volet d'obturation 8 selon son axe principal.

Selon un mode de réalisation alternatif, le dispositif d'aération 1 comprend plus de deux actionneurs, chaque actionneur étant lié à un organe d'entrainement et chaque organe d'entrainement étant par ailleurs lié en un point d'actionnement du volet lui étant propre.

## Revendications

1. Dispositif d'aération (1) pour un véhicule comprenant un cadre (4) définissant une ouverture (6) et un dispositif d'obturation (2) comprenant au moins un volet d'obturation (8) s'étendant selon une direction générale (Y) dans l'ouverture (6), le dispositif d'obturation (2) étant mobile entre une position ouverte et une position d'obturation, dans laquelle une surface de passage de l'air au travers du dispositif d'aération (1) est inférieure à la surface de passage de l'air dans la position ouverte, le volet (8) étant mobile entre une position ouverte lorsque le dispositif d'obturation (2) est dans la position ouverte et une position d'obturation lorsque le dispositif d'obturation (2) est dans la position d'obturation, le dispositif d'obturation (2) comprenant un premier actionneur (10) configuré pour déplacer le volet d'obturation (8) entre ses positions ouverte et d'obturation par un premier point d'actionnement (30) ; et
le dispositif d'aération (1) comprend un deuxième actionneur (14) ledit dispositif d'aération (1) étant caractérisié en ce que le deuxième actionneur (14) est configuré pour déplacer le volet d'obturation (8) entre ses positions ouverte et d'obturation par un deuxième point d'actionnement (32), le deuxième point d'actionnement (32) étant distinct du premier point d'actionnement (30), le premier (10) et le deuxième (14) actionneurs étant configurés pour déplacer conjointement le volet d'obturation (8).

2. Dispositif d'aération (1) selon la revendication 1, dans lequel l'ouverture (6) est délimitée au moins par une branche inférieure (34) et une branche supérieure (36), le premier (10) et le deuxième (14) actionneurs étant déportés sur un côté du cadre (4) hors de l'ouverture (6), lesdits premier (10) et deuxième (14) actionneurs s'étendant d'un côté de la branche inférieure (34) et/ou supérieure (36) opposé à l'ouverture (6).

3. Dispositif d'aération (1) selon l'une des revendications 1 ou 2, dans lequel chaque volet d'obturation (8) est monté pivotant à chacune de ses extrémités sur le cadre (4) selon un axe de pivotement (P) sensiblement parallèle à ladite direction générale (Y) pour faire pivoter le volet d'obturation (8) entre la position ouverte et la position d'obturation, le premier (10) et le deuxième (14) actionneurs étant configurés pour faire pivoter le volet d'obturation (8) entre la position ouverte et la position d'obturation.

4. Dispositif d'aération (1) selon la revendication 3, dans lequel l'axe de pivotement (P) est décalé de l'axe longitudinal central (C) du volet d'obturation (8).

5. Dispositif d'aération (1) selon l'une quelconque des revendications 1 à 4, dans lequel le premier actionneur (10) et le deuxième actionneur (14) sont espacés l'un de l'autre d'au moins 100mm.

6. Dispositif d'aération (1) selon l'une quelconque des revendications 1 à 5, dans lequel la longueur du volet d'obturation (8), mesurée selon la direction générale (Y), est supérieure à 200mm.

7. Dispositif d'aération (1) selon l'une quelconque des revendications 1 à 6, dans lequel le volet d'obturation (8) présente une forme incurvée.

8. Dispositif d'aération (1) selon l'une quelconque des revendications 1 à 7, comprenant un premier (12) et un deuxième (16) organes d'entrainement, le premier organe d'entrainement (12) étant lié d'une part au premier actionneur (10) et d'autre part au volet d'obturation (8) de sorte que le premier actionneur (10) déplace le volet d'obturation (8) par l'intermédiaire du premier organe d'entraînement (12), le deuxième organe d'entrainement (16) étant lié d'une part au deuxième actionneur (14) et d'autre part au volet d'obturation (8) de sorte que le deuxième actionneur (14) déplace le volet d'obturation (8) par l'intermédiaire du deuxième organe d'entraînement (16).

9. Dispositif d'aération (1) selon la revendication 8, dans lequel le premier (12) et le deuxième (16) organes d'entrainement sont des biellettes rigides.

10. Véhicule comprenant un dispositif d'aération (1) pour un véhicule selon l'une quelconque des revendications 1 à 9.

## Patentansprüche

1. Lüftungsvorrichtung (1) für ein Fahrzeug, umfassend einen Rahmen (4), der eine Öffnung (6) definiert, und eine Verschlussvorrichtung (2), umfassend mindestens eine Verschlussklappe (8), die sich in eine allgemeine Richtung (Y) in der Öffnung (6) erstreckt, wobei die Verschlussvorrichtung (2) zwischen einer offenen Position und einer Verschlussposition beweglich ist, wobei eine Durchgangsfläche der Luft durch die Lüftungsvorrichtung (1) kleiner ist als die Durchgangsfläche der Luft in der offenen Position, wobei der Verschluss (8) zwischen einer offenen Position, wenn die Verschlussvorrichtung (2) in der offenen Position ist, und einer Verschlussposition, wenn die Verschlussvorrichtung (2) in der Verschlussposition ist, beweglich ist, die Verschlussvorrichtung (2) umfassend ein erstes Stellglied (10), das konfiguriert ist, um die Verschlussklappe (8) durch einen ersten Betätigungspunkt (30) zwischen seiner offenen und seiner Verschlussposition zu bewegen;
und
wobei die Belüftungsvorrichtung (1) ein zweites Stellglied (14) umfasst, wobei die Lüftungsvorrichtung (1) **dadurch gekennzeichnet ist, dass** das zweite Stellglied (14)
konfiguriert ist, um den Verschluss (8) durch einen zweiten Betätigungspunkt (32) zwischen seiner offenen und seiner Verschlussposition zu bewegen, wobei der zweite Betätigungspunkt (32) von dem ersten Betätigungspunkt (30) verschieden ist, wobei das erste (10) und das zweite (14) Stellglied konfiguriert sind, um zusammen die Verschlussklappe (8) zu verstellen.

2. Lüftungsvorrichtung (1) nach Anspruch 1, **dadurch gekennzeichnet, dass** die Öffnung (6) mindestens durch einen unteren Zweig (34) und einen oberen Zweig (36) begrenzt ist, wobei das erste (10) und das zweite (14) Stellglied zu einer Seite des Rahmens (4) außerhalb der Öffnung (6) versetzt sind, wobei sich das erste (10) und das zweite (14) Stellglied auf einer Seite des unteren (34) und/oder oberen (36) Zweigs gegenüber der Öffnung (6) erstrecken.

3. Lüftungsvorrichtung (1) nach einem der Ansprüche 1 oder 2, wobei jede Verschlussklappe (8) an jedem seiner Enden schwenkbar entlang einer Schwenkachse (P) im Wesentlichen parallel zu der allgemeinen Richtung (Y) an dem Rahmen (4) angebracht ist, um die Verschlussklappe (8) zwischen der offenen Position und der Verschlussposition zu schwenken, wobei das erste (10) und das zweite (14) Stellglied konfiguriert sind, um die Verschlussklappe (8) zwischen der offenen Position und der Verschlussposition zu schwenken.

4. Lüftungsvorrichtung (1) nach Anspruch 3, wobei die Schwenkachse (P) gegenüber der mittleren Längsachse (C) der Verschlussklappe (8) versetzt ist.

5. Lüftungsvorrichtung (1) nach einem der Ansprüche 1 bis 4, wobei das erste Stellglied (10) und das zweite Stellglied (14) mindestens 100 mm voneinander beabstandet sind.

6. Lüftungsvorrichtung (1) nach einem der Ansprüche 1 bis 5, wobei die Länge der Verschlussklappe (8), gemessen in der Hauptrichtung (Y), größer ist als 200 mm.

7. Lüftungsvorrichtung (1) nach einem der Ansprüche 1 bis 6, wobei die Verschlussklappe (8) eine gekrümmte Form aufweist.

8. Lüftungsvorrichtung (1) nach einem der Ansprüche 1 bis 7, umfassend ein erstes (12) und ein zweites (16) Antriebselement, wobei das erste Antriebselement (12) einerseits mit dem ersten Stellglied (10) und andererseits mit der Verschlussklappe (8) verbunden ist, sodass das erste Stellglied (10) über das erste Antriebselement (12) die Verschlussklappe (8) bewegt, wobei das zweite Antriebselement (16) einerseits mit dem zweiten Stellglied (14) und andererseits mit der Verschlussklappe (8) verbunden ist, sodass das zweite Stellglied (14) über das zweite Antriebselement (16) die Verschlussklappe (8) bewegt.

9. Lüftungsvorrichtung (1) nach Anspruch 8, wobei das erste (12) und das zweite (16) Antriebselement starre Streben sind.

10. Fahrzeug, umfassend eine Lüftungsvorrichtung (1) für ein Fahrzeug nach einem der Ansprüche 1 bis 9.

## Claims

1. A ventilation device (1) for a vehicle comprising a frame (4) defining an opening (6) and a closing device (2) comprising at least one closing flap (8) extending in a general direction (Y) in the opening (6), the closing device (2) being movable between an open position and a closing position, in which a passage surface for the air through the ventilation device (1) is smaller than the passage surface for the air in the open position, the flap (8) being movable between an open position when the closing device (2) is in the open position and a closing position when the closing device (2) is in the closing position, the closing device comprising a first actuator configured to move the closing flap between its open and closed positions by a first actuating point (30);
and the ventilation device comprises a second actuator (14), said ventilation device (1) being **characterized in that** the second actuator (14) is configured to move the closing flap (8) between its open and closed positions by a second actuating point (32), the second actuating point being separate from the first actuating point, the first (10) and second (14) actuators being configured to move the closing flap jointly (8).

2. The ventilation device (1) according to claim 1, wherein the opening is delimited at least by a lower branch (34) and an upper branch (36), the first (10) and second (14) actuators being offset on one side of the frame (4) outside the opening (6), said first (10) and second (14) actuators extending on one side of the lower (34) and/or upper (36) branch opposite the opening (6).

3. The ventilation device (1) according to claim 1 or 2, wherein each closing flap (8) is mounted pivoting at each of its ends on the frame (4) along a pivot axis (P) substantially parallel to said general direction (Y) in order to pivot the closing flap (8) between the open position and the closed position, the first (10) and the second (14) actuators being configured to pivot the closing flap (8) between the open position and the closed position.

4. The ventilation device (1) according to claim 3, wherein the pivot axis (P) is offset from the central longitudinal axis (C) of the closing flap (8).

5. The ventilation device (1) according to any of the claims 1 to 4, wherein the first actuator (10) and the second actuator (14) are spaced apart from one another by at least 100 mm.

6. The ventilation device (1) according to any of the claims 1 to 5, wherein the length of the closing flap (8), measured along the general direction (Y), is greater than 200 mm.

7. The ventilation device (1) according to any of the claims 1 to 6, wherein the closing flap (8) has a curved shape.

8. The ventilation device (1) according to any of the claims 1 to 4, comprising a first (12) and a second (16) drive member, the first drive member (12) being connected on the one hand to the first actuator (10) and on the other hand to the closing flap (8) such that the first actuator (10) moves the closing flap (8) by means of the first drive member (12), the second drive member (16) being connected on the one hand to the second actuator (14) and on the other hand to the closing flap (8) such that the second actuator (14) moves the closing flap (8) by means of the second drive member (16).

9. The ventilation device (1) according to claim 8, wherein the first (12) and second (16) drive members are rigid connecting rods.

10. A vehicle comprising a ventilation device (1) for a vehicle according to any of the claims 1 to 9.
